Europäisches Patentamt

(19)

European Patent Office

Office européen des brevets

(11)     EP 0 878 452 A1

(12)          EUROPEAN PATENT APPLICATION
published in accordance with Art. 158(3) EPC

(43) Date of publication:
18.11.1998 Bulletin 1998/47

(21) Application number: 97900792.9

(22) Date of filing: 27.01.1997

(51) Int. Cl.$^6$: **C03C 27/06**, C03C 27/10

(86) International application number:
PCT/JP97/00187

(87) International publication number:
WO 97/28096 (07.08.1997 Gazette 1997/34)

(84) Designated Contracting States:
DE FR GB

(30) Priority: 02.02.1996 JP 17865/96
19.02.1996 JP 30210/96

(71) Applicant:
NIPPON SHEET GLASS CO., LTD.
Osaka-shi, Osaka 541 (JP)

(72) Inventors:
• TSUJINO, Toshifumi
Nippon Sheet Glass Co., Ltd.
Osaka 541 (JP)

• MAEDA, Koichi
Nippon Sheet Glass Co., Ltd.
Osaka-shi Osaka 541 (JP)

(74) Representative:
Petersen, Frank, Dipl.-Ing. et al
Lemcke, Brommer & Partner
Patentanwälte
Bismarckstrasse 16
76133 Karlsruhe (DE)

(54)     **DOUBLE-GLAZING UNIT AND PROCESS FOR THE PRODUCTION THEREOF**

(57)     The present invention relates to a multiple glazing including a pair of sheet glasses spaced apart from each other in the direction of thickness thereof via a spacer disposed along the peripheries of the sheet glasses, and relates also to a method of manufacturing the same. Conventionally, as the multiple glazing of the above-noted type, the dual-sealing type is most widely used which includes, along and between the peripheries of the pair of sheet glasses thereof, a primary sealant formed of an aluminum spacer and isobutylene-isoprene rubber entrapping a desiccating agent therein and a secondary sealant formed of silicone or hot-melt butyl. However, the second sealant provides elasticity ad adhesive strength to the glass in association with development of its curing reaction. For this reason, there has been problem that the glazing cannot be shipped for several hours after its production.

According to the present invention, a multiple glazing includes a pair of sheet glasses (3), (3) are spaced apart from each other in the direction of thickness thereof via a spacer (1) disposed at peripheries thereof, the pair of sheet glasses (3), (3) and the spacer (1) being bonded to each other by bonding means, wherein the pair of sheet glasses (3), (3) and the spacer (1) are bonded by high-frequency heating means. As a result, it is possible to simplify the manufacturing process, reduce the bonding time, enable immediate shipping after the production and to provide a multiple glazing at low costs.

FIG.1

## Description

[technical field]

The present invention relates to a multiple glazing including a pair of sheet glasses spaced apart from each other in the direction of thickness thereof via a spacer disposed along the peripheries of the sheet glasses, and relates also to a method of manufacturing the same.

[background art]

Conventionally, as the multiple glazing of the above-noted type, the dual-sealing type is most widely used which includes, along and between the peripheries of the pair of sheet glasses thereof, a primary sealant formed of an aluminum spacer and isobutylene-isoprene rubber entrapping a desiccating agent therein and a secondary sealant disposed along an outer periphery of the primary sealant and formed of thiokol, silicone or hot-melt butyl.

As a type of construction for fitting such multiple glazing to a sash, there is known one in which a frame member made of soft polyvinyl chloride (commonly referred to as "glazing channel" or "GLA-CHAN" for short) is integrally bonded to the outer peripheral edge of the multiple glazing and this flame member is to be fitted into an engaging groove of the sash to be assembled therewith.

Further, Japanese laid-open patent gazette No. Hei. 7-17748 discloses a method of manufacturing a multiple glazing in a continuous manner. According to the invention disclosed in this official gazette, each outer peripheral edge of a pair of sheet glasses is inserted with a substantially horizontal orientation into an aperture of an extruding opening of a die device; then, while a spacer pre-mixed with a desiccating agent therein is extruded into a gap between the respective outer peripheral edges of the sheet glasses, the sheet glasses and the die device are moved relative to each other straight along the outer peripheral edges of the glasses, so that the spacer with the desiccating agent may be integrally adhered and bonded with the inside of the outer peripheral edges of the pair of sheet glasses, thus the invention attempting to achieve an efficient assembly operation of the spacer.

The conventional dual-sealing type multiple glazing described above is normally produced on orders, so that the sheet glasses thereof vary significantly in size. For this reason, there has been a demand for simplifying its manufacturing steps through reduction in the number of its components. Further, in case the glazing is to be assembled with a sash, there would arise necessity of the additional step of e.g. bonding the frame member. Moreover, the second sealant will obtain elasticity and adhesive strength relative to the glass, with development of its curing reaction. Hence, a curing time period is needed, because of which the shipping of the product has to be awaited for at least few hours after its production.

With the method disclosed in the Japanese laid-open patent gazette No. Hei.7-17748 described above, the method presents difficulty in the treatment of the corners of the sheet glasses, leading to insufficient sealing thereof. Accordingly the resultant multiple glazing suffers poor reliability in its performance. Further, with this method, as the extruding step of the resin and the step of integrating the resin with the sheet glasses are effected at one time, it is necessary to control two mutually contradicting steps of cooling the extruded resin and of heating the resin for improving its wettability for reliable integration with the sheet glasses. However, it is very difficult and unpractical to effect such control operation in the manufacture process of the multiple glazing. Also, this method does not provide much freedom in the size and inter-spacing of the sheet glasses. Therefore, because of the limited kinds of multiple glazings which can be manufactured for a fixed amount of investment in plant and equipment, the method will inevitably invite cost increase due to e.g. depreciation of the plant and equipment.

The present invention has been made in view of the above-described problems of the prior art and its object is to provide a multiple glazing which is capable of dispersing stress associated with expansion/contraction of dry air present in the sealed space, restricting leakage of the seal, providing greater heat transmission resistance as well as improved heat insulating performance and to provide also a method of manufacturing a multiple glazing which method can simplify the complicated manufacturing steps and which can cope with various sizes.

[disclosure of the invention]

The above object is accomplished by the invention set forth in the claims. First, according to the characterizing features of the present invention, in a multiple glazing in which a pair of sheet glasses are spaced apart from each other in the direction of thickness thereof via a spacer disposed at peripheries thereof and the pair of sheet glasses and the spacer are bonded to each other by bonding means, the pair of sheet glasses and the spacer are bonded by high-frequency heating means.

Preferably, the bonding by the high-frequency bonding means is such that the pair of sheet glasses and the spacer are bonded by high-frequency or microwave dielectric heating utilizing a difference between a dielectric loss of adhesive agent and a dielectric loss of the sheet glasses and/or spacer or that a conductive material is incorporated within the spacer and the bonding by the high-frequency heating means is bonding between the spacer and the pair of sheet glasses by means of high-frequency dielectric heating on the conductive material.

Further, a method of manufacturing a multiple glazing according to the present invention is characterized in that the method includes: a first step of forming a material consisting of at least one kind of thermoplastic resin, thermoplastic elastomer or rubber having a water vapor permeability (0.1 mm thickness) of $100g/m^2 \cdot 24$ hours or less determined based on JIS Z208 into a predetermined shape by means of an extruding process, injection molding process or the like; a second step of cutting off or away the formed member formed by the first step into pieces having a predetermined shape and then heat-sealing or bonding together cut-off or cut-away faces of these pieces into a formed member corresponding to the external dimensions of the sheet glasses; a third step of disposing the formed member formed by the second step, as a spacer, on one sheet glass via an adhesive agent and then causing this spacer to be bound between the one sheet glass and the other sheet glass via the adhesive agent; and a fourth step of selectively heating the adhesive agent by keeping the bound member between the sheet glasses within an electric field of high-frequency or microwave, thus bonding the spacer to the respective sheet glasses.

Alternatively, a method of manufacturing a multiple glazing, according to the present invention, comprises:

a first step of forming a material made of thermoplastic resin or thermoplastic elastomer and a sheet-like or powder-like conductive material together into a formed member having a predetermined shape, the thermoplastic resin or elastomer material having a water vapor permeability (0.1 mm thickness) of $100g/m^2 \cdot 24$ hours or less determined based on JIS Z208;

a second step of cutting off or away the formed member formed by the first step into pieces having a predetermined shape and then heat-sealing or bonding together cut-off or cut-away faces of these pieces into a shape corresponding to the external dimensions of the sheet glasses;

a third step of disposing the formed member formed by the second step, as a spacer, on one sheet glass and then causing this spacer to be bound between the one sheet glass and the other sheet glass; and

a fourth step of selectively heating the conductive material by keeping the bound member between the sheet glasses within an electromagentic field of high-frequency wave, thereby to melt the spacer to be bonded with the sheet glasses.

As will be described later, the dielectric heating is suitable for those materials having a great value of product obtained by multiplying a dielectric constant by a dielectric loss tangent thereof. By utilizing a difference in this value, selective internal heating of the material is possible. This dielectric heating is energy efficient, thus enabling a shorter heating time. Accordingly, the bonding between the sheet glasses and the spacer may be completed within a shorter period of time and does not require any particularly complicated steps, either. Moreover, if an elastic material is selected as the spacer, it becomes possible to disperse stress associated with expansion/contraction of dry air present in the sealed space and also to reliably restrict leakage of the seal. Further, as such spacer provides a great heat transmission resistance, heat insulating performance may be improved. In addition, because of no necessity of any complicated manufacturing steps, multiple glazings may be provided in a variety of sizes at low costs.

In the above, preferably, the spacer is formed of a material consisting of at least one kind of thermoplastic resin, thermoplastic elastomer or rubber having a water vapor permeability (0.1 mm thickness) of $100g/m^2 \cdot 24$ hours or less determined based on JIS Z208. With this, it becomes advantageously possible to minimize the possibility of intrusion of moisture into the sealed layer between the multiple glazing and subsequent dew condensation.

Preferably, the spacer is integrated with a flame member to be assembled into a sash and this flame member is formed of a material comprised of at least one kind of thermoplastic resin, thermoplastic elastomer or rubber same as or different from that of the spacer. This may improve the airtightness between the spacer and the frame member and may allow great freedom in selecting various material properties of the spacer and the frame member, thus improving the functional convenience.

Preferably, the spacer incorporates therein non-vapor-transmitting substance. More preferably the spacer is pre-mixed with a desiccating agent; or the spacer includes a hollow portion within which a desiccating agent is sealed. With these, it becomes advantageously possible to minimize the possibility of intrusion of vapor into the sealed layer via the spacer.

Preferably, the adhesive agent has a product value of 0.08 or greater obtained by multiplying a dielectric constant by a dielectric loss tangent thereof at a frequency of 1 MHz.

Preferably, the thermoplastic elastomer comprises a copolymer of a polyolefine including polypropylene or polyethylene and a synthetic rubber including EPDM rubber or isobutylene-isoprene rubber.

Preferably the adhesive agent is extruded simultaneously with the material for forming the spacer to be integrated with portions of the spacer to be brought into opposition to the sheet glasses.

Further, it is also preferred that the adhesive agent be applied to portions of the sheet glasses to be brought into opposition to the spacer or to portions of the spacer to be brought into opposition to the sheet glasses.

Further, preferably a primer is applied in advance to portions of the sheet glasses to be brought into opposition to the spacer.

Preferably the conductive material comprises iron, aluminum, copper or alloys thereof or carbon black.

As detailed above, according to the present invention, the multiple glazing may be comprised of fewer number of components than the conventional multiple glazing and the manufacturing process may be simplified and the bonding time may be reduced for allowing immediate shipping after the production. So that, a multiple glazing may be provided at lower costs.

Further, in comparison with the conventional multiple glazing employing an aluminum spacer having a high heat conductivity, the heat transmission coefficient may be improved.

Moreover, if the entire spacer is formed of the elastic material, the stress will be dispersed, thereby to restrict occurrence of seal leakage and improving the reliability of the multiple glazing. Incidentally, as it is possible to add various kinds of colors to the spacer, it is possible to cope with varied needs from the consumers.

[brief description of the drawings]

Fig. 1 is a vertical section view showing principal portions of a multiple glazing relating to one mode of embodiment of the present invention,
Fig. 2 is a vertical section view showing principal portions of a multiple glazing relating to a further mode of embodiment of the present invention,
Fig. 3 is a perspective view showing a configuration of a formed member,
Fig. 4 is a perspective view illustrating a method of cutting the formed member,
Fig. 5 is a plan view showing a spacer comprised of an integrated assembly of the cut formed pieces.
Fig. 6 is a vertical section view showing principal portions of a multiple glazing relating to Embodiments 1, 2 and 3,
Fig. 7 is a vertical section view showing principal portions of a multiple glazing relating to Embodiment 4,
Fig. 8 is a vertical section view showing principal portions of a multiple glazing relating to Embodiments 5 and 6,
Fig. 9 is a vertical section view showing principal portions of a multiple glazing relating to Embodiment 7,
Fig. 10 is a vertical section view showing principal portions of a multiple glazing relating to a still further mode of embodiment of the present invention,
Fig. 11 is a vertical section view showing principal portions of a multiple glazing relating to a still further mode of embodiment of the present invention,
Fig. 12 is a perspective view showing a formed member similar to Fig. 3,
Fig. 13 is a perspective view illustrating a method of cutting the formed member similar to Fig. 4,
Fig. 14 is a vertical cross section view showing principal portions of a multiple glazing relating to Embodiments 8, 9 and 10,

Fig. 15 is a vertical section view showing principal portions of a multiple glazing relating to Embodiment 11,
Fig. 16 is a vertical section view showing principal portions of a multiple glazing relating to Embodiment 12, and
Fig. 17 is a vertical section view showing principal portions of a multiple glazing relating to Embodiment 13.

[best modes of embodying the invention]

Next, modes of embodiment of the present invention will be described in details with reference to the accompanying drawings.

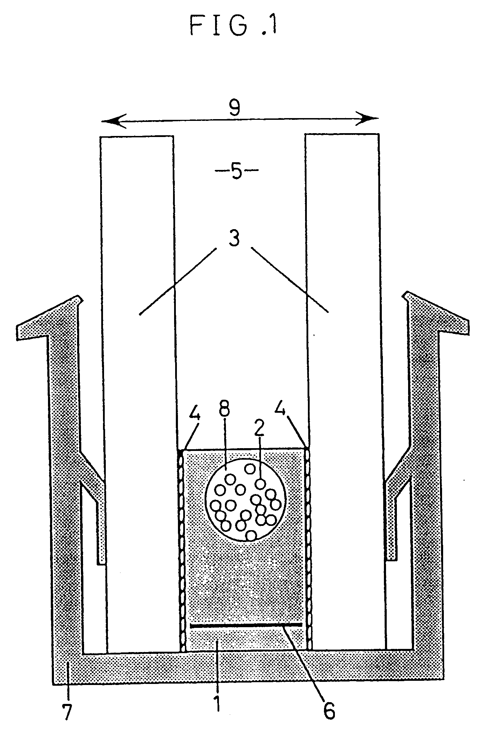

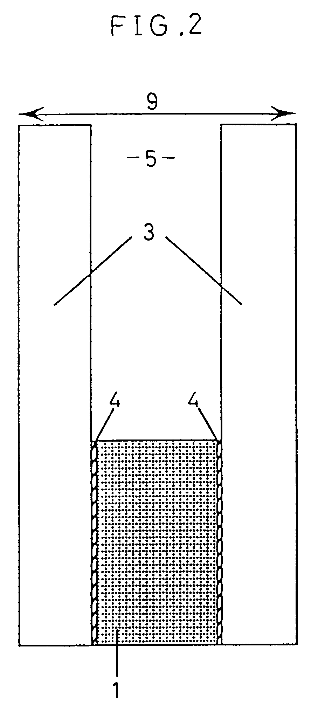

[1] Fig. 1 is a vertical section view showing principal portions of a multiple glazing with a frame member relating to one mode of embodiment of the present invention; and Fig. 2 is a vertical section view showing principal portions of a multiple glazing relating to a further mode of embodiment of the present invention.

In Fig. 1, a multiple glazing 9 is constructed such that a spacer 1 is bonded via an adhesive agent 4 to and between two sheet glasses 3, 3. Numeral 2 denotes a desiccating agent sealed within a hollow portion 8 of the spacer 1; numeral 5 denotes a sealed layer; and numeral 6 denotes a non-vapor-transmitting substance incorporated within the spacer 1. Along the outer peripheries of the sheet glasses 3, 3 binding the spacer 1 therebetween, there is disposed a frame member 7 formed of a material different from the spacer 1 and formed integrally therewith. Also, in the construction of Fig. 2, the desiccating agent 2 is mixed and kneaded with the spacer 1 in advance. The spacer 1 is bonded via the adhesive agent 4 with and between the two sheet glasses 3, 3.

A power loss Pc per unit area of a dielectric material is given by a following expression [1]

$$Pc = 5/9 \times f \cdot E^2 \cdot \varepsilon \cdot \tan \delta \times 10^{-12} \qquad [1]$$

where, f is a frequency; E is an effective value of electric field strength; $\varepsilon$ is a dielectric constant; and tan $\delta$ is a dielectric loss tangent or dielectric power factor. For dielectric heating as an example of high-frequency heating means, those materials having a great product value obtained by multiplying the dielectric constant by the dielectric loss tangent are suitable. Then, by utilizing a difference in this value, selective internal heating of the material is possible. Further, dielectric heating has such advantages of being energy efficient and allowing a shorter heating time.

Though depending on its composition, at the frequency of 1 MHz, the sheet glass 3 has a dielectric loss tangent (tan $\delta$) not greater than 0.01 at the maximum and a dielectric constant ($\varepsilon$) of 6.0-8.0. Therefore, the product of the dielectric constant and the dielectric loss tangent is not greater than 0.08. Accordingly, it is preferred that the product of the dielectric constant and the dielectric loss tangent of the adhesive agent 4 be at least 0.08 or greater, preferably 0.16 or greater. In general, organic materials have dielectric constants ranging between 2 and 5 at 1 MHz, so that the dielectric loss tangent ranges preferably at 0.02 or greater, more preferably at 0.04 or greater. The spacer 1 may be formed of any material having a dielectric loss tangent at least smaller than that of the adhesive agent 4, preferably a dielectric loss tangent of 1/2 or smaller of that of the latter. Within this range, any material may be conveniently selected for use, with consideration to its water vapor permeability, adhesiveness to the adhesive agent and so on.

As the frequency range of the high-frequency wave, a frequency range of 1-100MHz is employed. The radio wave of this frequency range belongs within the frequency range referred to as shortwave or very high frequency for use in broadcasting, radio communication or the like, so that the frequency range is subjected to regulation for avoiding mutual interference. Usable frequency ranges for industrial use (ISM band) are:

13.56 MHz$\pm$6.78kHz
27.12 MHz$\pm$162.78kHz
40.68MHz$\pm$20.34kHz

Although these three kinds of frequency ranges are suitable in the present embodiment, the frequency range will not be limited thereto, provided any appropriate measure such as prevention of leakage of wave is taken.

The microwave is a generic term for those electromagnetic waves belonging within the frequency range of 300MHz-300GHz. And, the microwave too is being used for various purposes such as broadcasting, radio communication and so on and therefore is subjected to regulations imposed on the use of the frequency range to avoid mutual interference. The domestic Wireless Radio Act provides 2450MHz for electromagnetic ovens and 915MHz for dielectric heating devices for industrial use. In the present invention, 2450MHz and 915MHz may be employed as the microwave frequency.

As the desiccating agent 2, any material capable of absorbing moisture may be employed. Among such materials, synthetic crystalline zeolite (trade name: "MOLECULAR-SIEVE" manufactured by Union Carbide Corp.), silica gel, activated alumina, calcium sulfuric anhydrite or calcium chlorinated anhydrite and so on are preferred.

The desiccating agent 2 may be used as being sealed within the hollow portion 8. Alternatively, as will be described later, the desiccating agent 2 may be mixed and kneaded in advance with the spacer 1 which is still in the form of raw material. Its amount to be used may be determined in correspondence with the peripheral length of the spacer 1 and the inter-distance between the two sheet glasses 3, 3 (i.e. the thickness of the spacer). For example, in the case of using the "MOLECULAR-SIEVE" (3A), for 1 m$^2$ of a multiple glazing having a spacer thickness of 6mm, the agent will be used in the amount of 10g-500g,preferably 30g-300g, more preferably 50g-200g.

As methods of mixing and kneading the desiccating agent with the material, a method in which the desiccating agent is pulverized into a particle diameter of 0.1mm or less in advance, then the pulverized agent will be mechanically mixed with the raw material of the thermoplastic elastomer, thermoplastic resin or rubber by using a kneader-mixer such as a kneader or bunbury's mixer while the material and the agent being heated and molten or a mixing method (screw method) in which the desiccating agent is fed to the die while the formed member to constitute the spacer is being subjected to an extrusion or injection molding process may be cited for example.

Further, when the desiccating agent 2 is to be sealed within the spacer 1, a hollow portion 8 having a diameter of 4 mm will be defined inside the spacer 1 having 6 mm thickness, so that the desiccating agent 2 in the form of particles or powder may be filled within this hollow portion 8. Incidentally since the hollow portion 8 is a space provided for accommodating the desiccating agent 2 for absorbing moisture present in the sealed layer 5 formed inside the multiple glazing 9, it is preferred that this portion be formed at a portion in the spacer 1 closer to the sealed layer 5.

For allowing moisture present in the sealed layer 5 to be speedily absorbed by the desiccating agent 2, it is preferred that one or a plurality of small pores (not shown) be defined at a border potion of the spacer 1 between the hollow portion 8 and the sealed layer 5. Incidentally, although these small pores may be defined at the time of forming the spacer 1, this may be done in a separate step after the forming step. Also, although the hollow portion 8 has a circular cross section in Fig. 1, the invention is not limited thereto. In short, the portion may have any shape as long as it can seal the desiccating agent 2 therein.

As the thermoplastic elastomer (TPE), it is possible to employ: styrene type (SBC) comprised of a hard phase of polystyrene and a soft phase of butadiene rubber or isoprene rubber; olefin type (TPO) comprised of a hard phase of a polyethylene or polypropylene and a soft phase of isobutylene-isoprene rubber or ethylene-propylene rubber; vinyl chloride type (TPVC) comprised of a hard phase of crystalline polyvinyl chloride and a soft phase of non-crystalline polyvinyl chloride; urethane type (TPU) comprised of a hard phase of urethane and a soft phase of polyester or polyether; ester type (TPEE) comprised of a soft phase of polyester and a hard phase of polyether or polyester; amide type (TPAE) comprised of a hard phase of polyamide and a soft phase of polyether or polyester; TPE comprised of syndiotactic 1,2 polybutadiene rubber and a soft phase of non-crystalline butadiene rubber; TPE comprised of a soft phase of trans-1.4-polyisoprene (PIP) and a hard phase of crystalline PIP; TPE comprised of a hard phase of metal carboxylate ion cluster and a hard phase of non-crystalline polyethylene; TPE comprised of a hard phase of crystalline polyethylene and a soft phase of crystalline polyethylene and a soft phase of ethylene-vinyl acetate copolymer or ethylene-ethylacrylate copolymer; TPE comprised of a hard phase of crystalline polyethylene and a soft phase of chlorinated polyethylene; or TPE comprised of a hard phase of fluorinated resin and a soft phase of fluoro rubber and so on.

Among the thermoplastic elastomers, Kraton (Shell Chemical Corp.) may be cited as an example of the styrene type; Trefsin and Santoprene (manufactured by AES Corp.) may be cited as examples of the olefin type; and Alcryn (manufactured by Du Pond Tau Co., Ltd.) may be cited as an example of the vinyl chloride type, respectively.

As the thermoplastic resins, it is possible to cite, for example, polyolefine such as polyethylene, polypropylene or the like, polyvinyl chloride, polystyrene, ABS resin, polycarbonate resin, PET resin, nylon and so on.

As the rubber, natural rubber, isoprene rubber, butadiene rubber,, 1, 2-polybutadiene rubber, styrene-butadiene rubber, chloroprene rubber, nitrile rubber, isobutylene-isoprene rubber, ethylene-propylene rubber, chlorosulfonated polyethylene, acrylic rubber, epichlorohydrin rubber, polysulfide rubber, silicone rubber, fluoridated rubber, urethane rubber and so on.

The thermoplastic resins, thermoplastic elastomers or rubbers may be added with known coloring agents to provide colored spacers.

The spacer 1 should preferably have as small as possible water vapor permeability in order to prevent intrusion of moisture into the sealed layer 5 of the multiple glazing 9 and subsequent occurrence of dew condensation. Specifically the spacer should have a water vapor permeability (at 0.1 mm thickness) of $100g/m^2 \cdot$ 24 hours or less determined based on JIS Z208, preferably $50g/cm^2 \cdot$ 24 hours or less, especially $20g/cm^2 \cdot$ 24 hours or less.

In the above, the water vapor permeability based on JIS Z208 refers to an amount of water vapor transmitted through a unit area of the spacer within a predetermined time. Specifically, at the temperature of 40 °C (condition B), the air present on one side of the spacer as a border surface is kept at a relative humidity of 90% while the air on the other side of the same is kept under a dry condition by means of the desiccating agent. Under these conditions, the mass (g) of the water vapor transmitted through the border surface within 24 hours is measured and this measured value then is converted into a value corresponding to 1 $m^2$ of this material per 0.1 mm thickness of the same.

It is preferred that the width (in the vertical direction in Fig. 1) of the spacer 1 interposed in the multiple glazing 9 be as small as possible, so that a large opening as a window may be provided. However, if the width is too small, this will result in increase in the water vapor permeability, so that vapor may flow into the sealed layer 5 leading to dew condensation or result in reduction in the bonding area for retaining the two sheet glasses 3, 3 together, thus deteriorating the structural reliability of the glazing. Accordingly, the width of the spacer 1 should preferably be determined with consideration to these factors; and the width is preferably 3mm-15mm, more preferably 5mm-10mm.

The hardness of the material used in the flame member 7 is determined with consideration to its workability and the airtightness provided when it is fitted within the sash. Preferably, the material has a Shore A hardness of 90 or less. Further, although the flame member 7 may be formed of the same material as the spacer 1, if the material properties required for the respective members should be taken into consideration, it is preferred that they be formed of different materials or materials differing in the hardness. In this respect, it is preferred that the material for the spacer 1 have a lower water vapor permeability than that for the frame member 7. Also, the spacer 1 may be formed of material pre-mixed and kneaded with the desiccating agent 2, while the frame member 7 may be formed of material not mixed or kneaded with the desiccating agent 2.

The flame member 7, since this is to be used in an environment exposed to rain, sun light and so on, should preferably be formed of material having superior weatherability to that of the spacer 1. As some specific combinations (denoted as "spacer/frame member"), when these are formed of different materials, it is possible to cite: copolymer of isobutylene-isoprene rubber/copolymer of EPDM and polypropylene; isobutylene-isoprene rubber/copolymer of Alcryn, isobutylene-isoprene rubber and polypropylene (e.g. Trefsin manufactured by AES Corp.)/copolymer of vinyl chloride, isobutylene-isoprene rubber and polypropylene/copolymer of EPDM and polypropylene (e.g. Santoprene manufactured by AES Corp.), and so on. Further, when these are formed of materials differing in the hardness thereof, it is possible to cite, as example: isobutylene-isoprene rubber having Shore A hardness 70/ isobutylene-isoprene rubber having Shore A hardness 50; Santoprene having Shore D hardness 40 (manufactured by AES Corp.) and Santoprene having Shore A hardness 55 (manufactured by AES Corp.). Incidentally, these may be formed of materials which are different both in kind and hardness thereof. Further, in view of the material costs, the spacer 1 may be formed of different kinds of materials as well.

As the non-vapor-transmitting substance 6 to be incorporated within the spacer 1, any material which does not allow transmission of water vapor therethrough may be employed. However, a metal substance such as aluminum, stainless steel or iron in the form of a tape is particularly preferred. If the resistance of heat transmission when the substance is used in the multiple glazing and its simultaneous extrusion process with the thermoplastic elastomer for forming the spacer are taken into consideration, the substance should preferably have as small as possible thickness, e.g. 0.5 mm or less, more preferably 0.1 mm or less. Further, the non-vapor-transmitting substance 6 need not have such strength as to be able to maintain constant the distance between the sheet glasses 3, 3. However, if this non-vapor-transmitting substance 6 is provided in the form of a tape and incorporated as such within the spacer 1, it should be incorporated in such a manner that the width direction of the tape be aligned with the thickness direction of the spacer 1 (the right-left direction in Fig. 1) so as to minimize intrusion of water vapor into the sealed layer 5 via the spacer 1.

As the adhesive agent 4, any material is usable which may integrate the spacer 1 and the sheet glass 3 together and which provides a tensile adhesive strength between the sheet glass 3 and the adhesive agent 4 and a tensile adhesive strength between the spacer 1 and the adhesive agent 4 which both are 1 $kg/cm^2$ or more, preferably 3 $kg/cm^2$ or more. Incidentally, considering the difference in the thermal expansion coefficients of the spacer 1 and the sheet glass 3, it is preferred that the adhesive agent 4 be of a material having rubber elasticity

As the adhesive agent 4, a thermoplastic adhesive agent, e.g. a hot-melt type adhesive agent, may be suitably employed. Such thermoplastic adhesive agent may be integrated with the spacer through simultaneous extrusion thereof with the spacer. In the case of thermosetting adhesive agent, the curing time may be reduced by high-frequency dielectric heating. Hence, the agent may be either thermoplastic or thermosetting.

The thickness of the adhesive agent 4 for use is 1 mm or less, preferably 0.5 mm or less, more preferably 0.2 mm or less. The thickness of the adhesive agent 4 will be determined, considering the water vapor permeability of the adhesive agent 4 and the durability of the multiple glazing 9. It is also possible to employ an adhesive agent 4 mixed and kneaded with a desiccating agent in advance.

Some specific examples of the adhesive agent 4 are: halogenated polyolefine type such as chlorinated polypropylene, chlorinated ethylene or ethylene vinyl acetate type, acrylic type, nylon type, epoxy type, polyamide type, or hot-melt butyl type, sealant butyl based on polyisobutylene, gum arabic, polyester type, silicone type, urethane type, thiokol, and mixtures thereof. In order to increase the amount of heat generation of the adhesive agent, it is also possible to add an additive having a large dielectric loss such as diethylene glycol, ethanolamine or the like or a material such as carbon black which contains a dielectric electron and generates heat through joule heat loss.

Next, a manufacturing method relating to one mode of embodiment of the invention will be described.

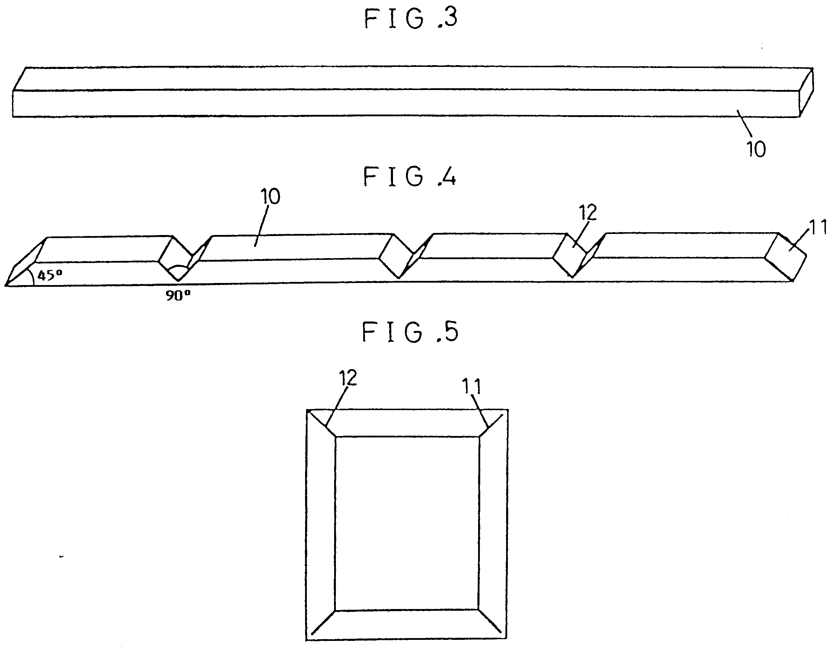

The thermoplastic resin, thermoplastic elastomer or rubber described above is formed into a formed member 10 as shown in Fig. 3 through an extrusion process or injection molding process. In case the forming process is effected with using rubber, a vulcanizing operation will be required after the extrusion. However, in the present invention, the method of forming the thermoplastic elastomer or rubber may be other than the extrusion process or injection molding process, as long as such method is capable of forming the material into a predetermined shape suitable for the object of the present invention.

Next, at predetermined portions, the formed member 10 is cut off so as to obtain an end face having a slope of 45 degrees or cut away to obtain cut-away portions, as shown in Fig. 4. Then, by heating the cut-off faces 11 or cut-away faces 12 of the cut-off or cut-away formed member 10 to a fluidizable temperature, the cut-off faces 11 or the cut-away faces 12 are placed end-to-end each other to be heat-fused together, whereby the formed member 10 is rendered into a frame-like member as shown in Fig. 5 to be used as the spacer 1. Incidentally, instead of the heat-fusing process, an adhesive agent (not shown) may be employed for bonding the cut-off faces 11 or cut-away aces 12 together.

Next, the adhesive agent 4 is applied to the outer peripheral edge of each of the pair of sheet glasses 3, 3 and then the spacer 1 is placed on to this adhesive agent 4 on the one sheet glass 3. In this, adjustment is made so as to substantially align the respective peripheral edge of the spacer 1 with the corresponding respective outer peripheral edge of the sheet glass 3. Thereafter, the other sheet glass 3 is placed on to the spacer 1, whereby the spacer 1 is retained under pressure between the two sheet glasses 3, 3.

Incidentally, in the above process, instead of applying the adhesive agent 4 to the outer peripheral edge of the sheet glass 3, the agent may alternatively be applied to those portions of the spacer 1 which are to be brought into opposition to the sheet glass 3.

Next, the sheet glasses 3,3 binding the spacer 1 under pressure therebetween are put into a high-frequency or microwave electric field, so that the adhesive agent 4 may be selectively heated so as to bond the respective sheet glasses 3,3 with the spacer 1 via the adhesive agent 4.

In the following, the present mode of embodiment will be described more specifically by way of embodiments. It should be noted, however, that the present invention is not limited thereto.

(Embodiment 1)

A thermoplastic elastomer (trade name: Santoprene manufactured by AES Corp; Shore A hardness 55) which is a copolymer of polypropylene and ethylene-propylene rubber (EPDM) and MOLECULAR SIEVE (3A) were mixed and kneaded in advance, with the MOLECULAR SIEVE (3A) as a synthetic crystalline zeolite being 15WT%. And, this mixture material was then formed by an extrusion process, whereby a formed member 10 was obtained. This formed member 10 was cut off into pieces of a required length having an end face having 45 degree slope and cut-away portions were formed at predetermined portions thereof. Thereafter, the cut-off faces 11 and the cut-away faces 12 were heat-fused to each other, whereby a spacer 1 having a frame-like configuration was obtained. Incidentally, the spacer 1 had 5.8 mm thickness.

Next, the adhesive agent 4 comprised of maleate graft polymer of chlorinated propylene (trade name: CY9020A, manufactured by Toyo Chemical Industrial Corp.)was applied in the thickness of 30 µm along the 1 cm width of the outer peripheral portion of one sheet glass 3 having 3 mm thickness; and then the spacer 1 was placed on to the adhesive agent 4 on the sheet glass 3. Further, in the same manner as above, the other sheet glass 3 was placed on the spacer 1 via the adhesive agent 4.

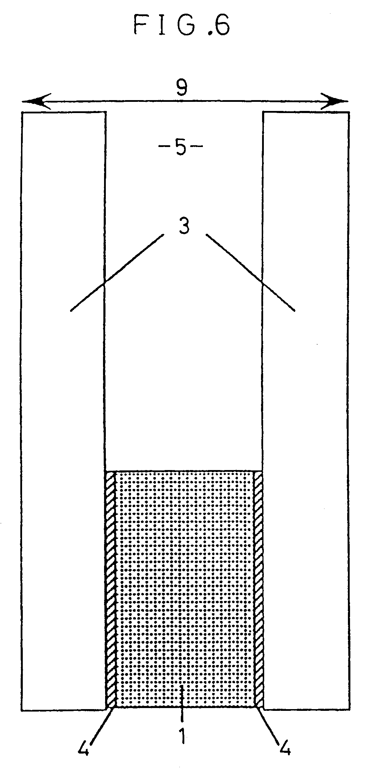

Next, the sheet glasses 3, 3 with the spacer 1 were put into a high-frequency electric field of 40.68 MHz, and a dielectric heating operation of the adhesive agent 4 was conducted with setting the high-frequency power at 3kW the distance between the electrodes at 20 mm, the strength of the electric field at 2 kV/cm. By the dielectric heating, the adhesive agent 4 alone was selectively heated internally. With natural cooling thereafter, the sheet glasses 3, 3 and the spacer 1 were respectively bonded by the adhesive agent 4, whereby a multiple glazing 9 was obtained (see Fig. 6).

On this multiple glazing 9, a performance test in accordance with JIS R3209 was conducted. After 24 hours following the manufacture of the multiple glazing 9, its dew point performance was checked, which provided an initial dew point performance of -50°C. The heat transmission coefficient was 2.80. After 42 days of moisture proof and fading test and 72 cycles of heating-cooling repeat test, the dew-point temperature was -65°C or lower. Hence, the glazing had good durability. Further moisture proof and fading tests were conducted and even after 200 days of testing, there was observed no change in the dew-point performance.

(Embodiment 2)

Except that the used amount of the MOLECULAR SIEVE (3A) employed in Embodiment 1 was changed to 30 WT%, the same process as Embodiment 1 was conducted, whereby a multiple glazing 9 was obtained (see Fig. 6).

On this multiple glazing 9, a performance test in accordance with JIS R3209 was conducted. After 24 hours following the manufacture of the multiple glazing 9, its dew point performance was checked, which provided an initial dew point performance of -55°C. The heat transmission coefficient was 2.80. After 42 days of moisture proof and fading test and 72 cycles of heating-cooling repeat test, the dew-point temperature was -65°C or lower. Hence, the glazing had good durability. Further moisture proof and fading tests were conducted and even after 200 days of these testing, there was observed no change in the dew-point performance.

(Embodiment 3)

Except that Trefsin (manufactured by AES Corp; hardness 65) comprised of a copolymer of isobutylene-isoprene rubber and polypropylene was employed as the thermoplastic elastomer for the spacer 1, the process was conducted in the same manner as Embodiment 1, whereby a multiple glazing 9 (see Fig. 6) was obtained.

On this multiple glazing 9, a performance test in accordance with JIS R3209 was conducted. After 24 hours following the manufacture of the multiple glazing 9, its dew point performance was checked, which provided an initial dew point performance of -35°C. The heat transmission coefficient was 2.80. After 42 days of moisture proof and fading test and 72 cycles of heating-cooling repeat test, the dew-point temperature was -65°C or lower. Hence, the glazing had good durability. Further moisture proof and fading tests were conducted and even after 200 days of these testing, there was observed no change in the dew-point performance.

(Embodiment 4)

As a thermoplastic elastomer which is a copolymer of polypropylene and ethylene-propylene rubber (EPDM), Santoprene (trade name; Shore D hardness 40) was shaped by an extrusion process, whereby a formed member 10 having a hollow portion 8 of 4 mm in diameter was obtained. After this formed member 10 was cut into a predetermined length to obtain an end face having 45 degree slope, in the surface of the sides of the formed member 10 adjacent the sealed layer 5, a plurality of pores having a diameter of 0.2 mm approximately were defined with an interval of 2 cm, so as to allow communication of air to be sealed within the sealed layer 5 with the hollow portion 8. Then, after filling the desiccating agent 2 (MOLECULAR SIEVE (3A)) into the hollow portion 8, the cut-off faces 12 are heat-fused together, whereby a spacer 1 was obtained. This spacer 1 had 5.9 mm thickness.

Thereafter, on the faces of the spacer 1 to be bonded with the sheet glasses 3, an adhesive agent 4 comprised of a mixture (weight ratio 1:1) of chlorinated propylene (trade name: 13-LB manufactured by Toyo Chemical Industrial Corp.) and chlorinated ethylene vinyl acetate (trade name: 10SV manufactured by Toyo Chemical Industrial Corp.) was applied in the thickness of 30 µm. And, the spacer 1 was placed on the sheet glass 3 via the adhesive agent 4. In the same manner as above, the other sheet glass 3 was placed on the spacer 4 via the adhesive agent 4.

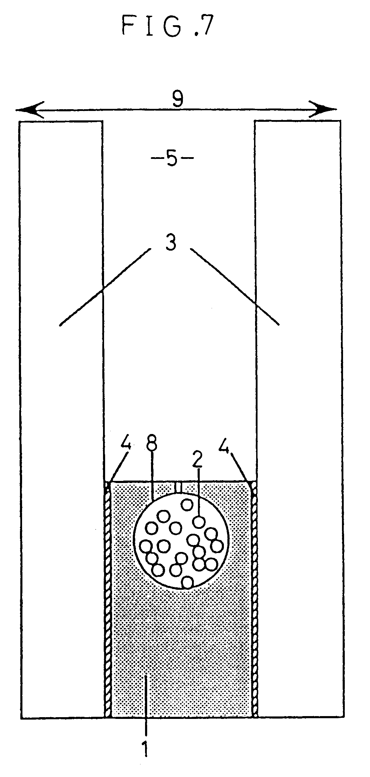

Next, the adhesive agent 4 was subjected to a dielectric heating operation with the entire face of the spacer 1 applied with the adhesive agent 4 being located within the high-frequency electric field, whereby a multiple glazing 9 having a length of 500 mm and a width of 350 mm was obtained (see Fig. 7). Incidentally, the used amount of the MOLECULAR SIEVE (3A) was 30 g.

On this multiple glazing 9, a performance test in accordance with JIS R3209 was conducted. After 24 hours following the manufacture of the multiple glazing 9, its dew point performance was checked, which provided an initial dew point performance of -65°C. The heat transmission coefficient was 2.77. After 42 days of moisture proof and fading test and 72 cycles of heating-cooling repeat test, the dew-point temperature was -65°C or lower. Hence, the glazing had good durability. Further moisture proof and fading tests were conducted and even after 200 days of these testing, there was observed no change in the dew-point performance.

(Embodiment 5)

As a thermoplastic elastomer which is a copolymer of polypropylene and ethylene-propylene rubber (EPDM), Santoprene (trade name; Shore D hardness 40) was shaped by an extrusion process, whereby a formed member 10 having a hollow portion 8 of 6 mm in diameter was obtained. After this formed member 10 was cut into a predetermined length to obtain an end face having 45 degree slope and cut-away portions were defined at predetermined portions thereof, MOLECULAR SIEVE (3A) as the desiccating agent 2 was filled into the hollow portion 8. Then, the cut-off faces 11 and the cut-away faces 12 are respectively heat-fused together, whereby a spacer 1 having a frame-like configuration was obtained. Incidentally, this spacer 1 had 11.9 mm thickness. Next, along the 1 cm width of the outer peripheral portion of one sheet glass 3 having 3 mm thickness, a primer ($\gamma$ - aminopropyltriethoxysilane; trade name: KBE-903 manufactured by Shinetsu Chemical Industrial Corp.) (not show) was applied in the thickness of 0.01 $\mu$m. On this, the adhesive agent 4 made of chlorinated polypropylene (trade name: 13LLB) in the form of a sheet having a thickness of 0.2 mm and a width of 1 cm was placed, and further on this adhesive agent 4, the spacer 1 was disposed. Further, in the same manner as above, the other sheet glass 3 was placed on to the spacer 1 via the primer and the adhesive agent 4.

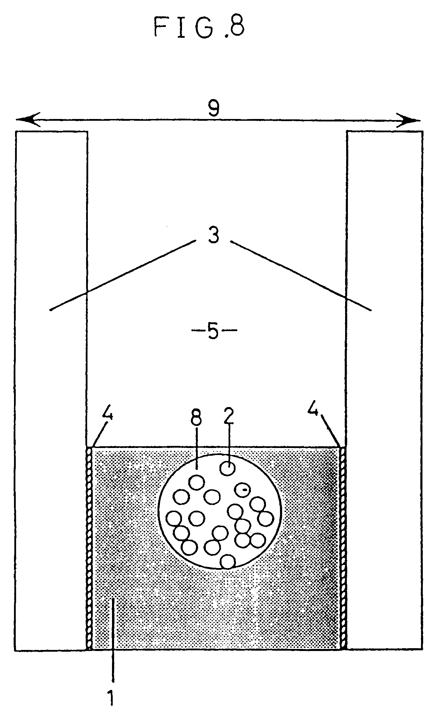

Next, the adhesive agent 4 was subjected to a dielectric heating operation with the adhesive agent 4 in the form of a sheet being located within the high-frequency electric field, whereby a multiple glazing 9 having a length of 500 mm and a width of 350 mm was obtained (see Fig. 8). Incidentally, the amount of the MOLECULAR SIEVE (3A) used was 45 g.

On this multiple glazing 9, a performance test in accordance with JIS R3209 was conducted. Alter 24 hours following the manufacture of the multiple glazing 9, its dew point performance was checked, which provided an initial dew point performance of -65°C. The heat transmission coefficient was 2.47. After 42 days of moisture proof and fading test and 72 cycles of heating-cooling repeat test, the dew-point temperature was -65°C or lower. Hence, the glazing had good durability. Further moisture proof and fading tests were conducted and even after 200 days of these testing, there was observed no change in the dew-point performance.

(Embodiment 6)

Except that the sheet-like adhesive agent 4 employed in Embodiment 5 was extruded simultaneously with the spacer 1 and was formed on the faces of the spacer 1 to be brought into opposition to the sheet glass 3, the process was conducted in the same manner as Embodiment 5 (see Fig. 8).

On this multiple glazing 9, a performance test in accordance with JIS R3209 was conducted. Alter 24 hours following the manufacture of the multiple glazing 9, its dew point performance was checked, which provided an initial dew point performance of -65°C. The heat transmission coefficient was 2.48. After 42 days of moisture proof and fading test and 72 cycles of heating-cooling repeat test, the dew-point temperature was -65°C or lower. Hence, the glazing had good durability Further moisture proof and fading tests were conducted and even after 200 days of these testing, there was observed no change in the dew-point performance.

(Embodiment 7)

As a thermoplastic elastomer which is a copolymer of polypropylene and ethylene-propylene rubber (EPDM), Santoprene (trade name; Shore A hardness 73) and MOLECULAR SIEVE were mixed and kneaded in advance, with the MOLECULAR SIEVE (3A) being WT20%. This kneaded mixture, Santoprene (trade name; Shore A hardness 55) and an aluminium tape 6 having a thickness of 0.08 mm and a width of 5.4 mm were extruded simultaneously, so that the kneaded mixture and aluminum tape 6 formed the portion to be used as the spacer 1 and Santoprene (trade name; Shore A hardness 55) formed the portion to constitute the frame member 7. This formed member 10 was cut off into pieces of a required length having an end face having 45 degree slope. Thereafter, the cut-off faces 11 were heat-fused to each other, whereby a spacer 1 was obtained. Incidentally, the spacer 1 had 5.8 mm thickness.

On the faces of the spacer 1 to be bonded with the sheet glasses 3, a primer (trade name: 459X; manufactured by LORD Corp.) (not shown) was brush-applied in the thickness of about 25 $\mu$m. And, the adhesive agent 4 of epoxy type (trade name: fusor; manufactured by LORD Corp.) was applied in the thickness of 50 μm along the 1 cm width of the outer peripheral portion of the sheet glass 3. Then, the spacer 4 was placed on the sheet glass 3 so that the primer and the adhesive agent 4 may brought into opposition to each other.

Next, the adhesive agent 4 was subjected to a dielectric heating operation with the entire faces of the spacer 1 applied with the adhesive agent 4 being located within a high-frequency electric field, whereby a multiple glazing 9 having a length of 500 mm and a width of 350 mm was obtained (see Fig. 8). Incidentally, the amount of MOLECULAR SIEVE (3A) used was 45 g.

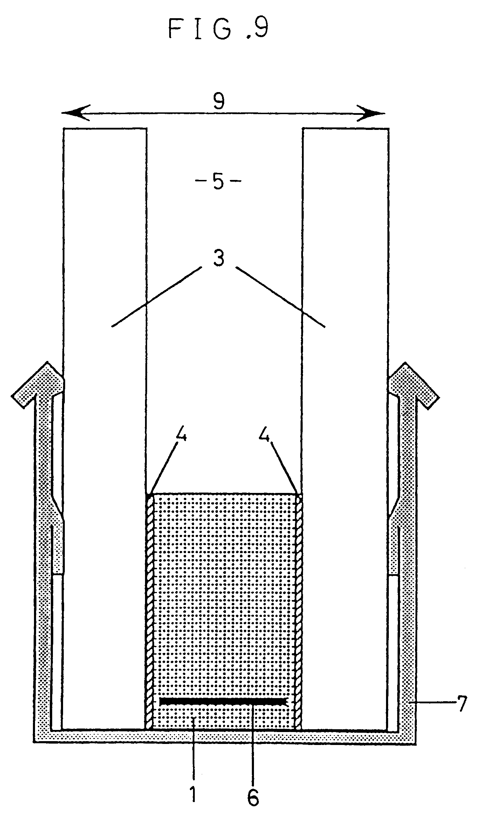

Next, the adhesive agent 4 was subjected to a dielectric heating operation with the entire faces of the spacer 1 applied with the adhesive agent 4 being located within the high-frequency electric field. By promoting curing of the adhesive agent 4 with this dielectric heating, a multiple glazing 9 having a length 500 mm and a width of 350 mm was obtained (see Fig. 9).

On this multiple glazing 9, a performance test in accordance with JIS R3209 was conducted. After 24 hours following the manufacture of the multiple glazing 9, its dew point performance was checked, which provided an initial dew point performance of -45°C. The heat transmission coefficient was 2.85. After 42 days of moisture proof and fading test and 72 cycles of heating-cooling repeat test, the dew-point temperature was -65°C or lower. Hence, the glazing had good durability. Further moisture proof and fading tests were conducted and even after 200 days of testing, there was observed no change in the dew-point performance.

[II] Still further mode of embodiment will be described.

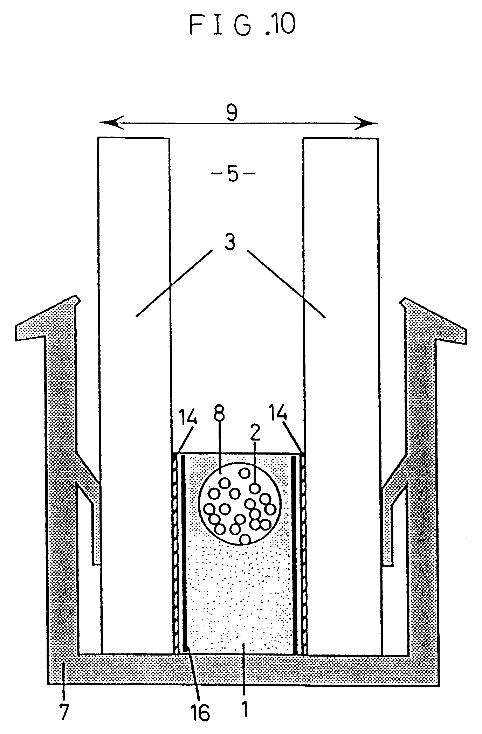

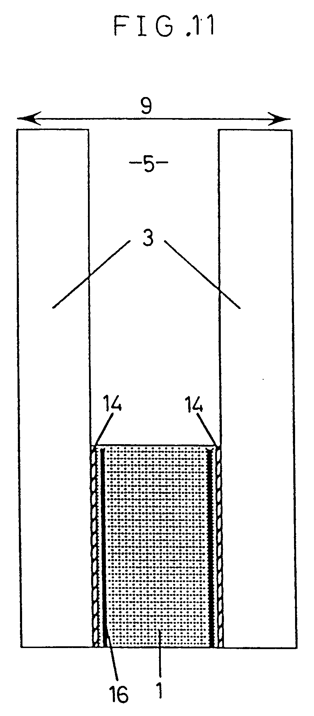

Fig. 10 shows a vertical section view showing principal portions of a multiple glazing with a frame member relating to this mode of embodiment; and Fig. 11 is a vertical section view showing principal portions of a multiple glazing relating to a still further mode of embodiment of the present invention.

In Fig. 10, the differences from the multiple glazing of Fig. 1 lie in that the spacer 1 is bonded via primer 14 between the two sheet glasses 3, 3 and that the spacer 1 incorporates therein a conductive film 16 capable of dielectric heating. The remaining portions of the construction are the same as those of the multiple glazing of Fig. 1; and therefore the like members are denoted with like reference numerals. In Fig. 11, the desiccating agent 2 is mixed and kneaded with the spacer 1 in advance. The spacer 1 is bonded via the primer 14 between the two sheet glasses 3, 3.

In this mode of embodiment, as the high-frequency range, ranges higher than 100 Hz and lower than 1 MHz may be employed.

The dielectric heating, as an example of the high-frequency heating means, relies, in its principle, on the heating due to hysteresis loss and joule heat loss. The hysteresis loss Pη which is heating of magnetic body is given by a following expression [2].

$$P\eta = \eta \cdot f \cdot Bm^{1.6} \cdot V(w) \qquad [2]$$

where Pη is the hysteresis loss (w), η is a hysteresis coefficient, f is a frequency, Bm is a maximum magnetic flux density and V is a volume of the heated object.

Further, the eddy-current loss Pc is given by a following expression [3].

$$Pc = K \cdot N^2 \cdot I^2 \cdot a \cdot (\rho \cdot \mu \cdot f)^{0.5} \qquad [3]$$

where Pc is the joule heat due to the eddy current, K is a proportional constant, N is the coil winding number, ρ is a resistibility, μ is an effective magnetic permeability of the material, a is a radius of a cylinder in case the material is in the form of a cylinder.

When the frequency exceeds several 10kHz's, this results in much greater increase in the eddy current loss, which increases in proportion to the second power of the frequency. Further, as the heating due to eddy current loss is heating of the surface of the conductive substance, a material placed in contact with this conductive substance surface may be heated.

The conductive material 16 may be such metals as iron, aluminum, copper and so on, or stainless steel, brass or the like as alloys containing such metals may be suitably used. Then, the conductive material in the form of a sheet or powder consisting of such substances will be inserted and formed within the thermoplastic resin or thermoplastic elastomer. Further, in the case of powder-like conductive material such as carbon black, this may be mixed in advance with the thermoplastic resin or thermoplastic elastomer, so that the thermoplastic resin or thermoplastic elastomer premixed with carbon black and the thermoplastic resin or thermoplastic elastomer may be extruded simultaneously for use. Incidentally, when the carbon black is used, a high-frequency electric field of several 10 MHz's or microwave should be used for the heating.

It is preferred that the conductive material 16 be incorporated within the spacer 1 at a position in the vicinity of the face thereof to be bonded with the glass sheet 3. Preferably its position is at a distance of 1 mm or less, more preferably 0.5 mm or less, in the thickness direction of the spacer 1, from its face to be bonded with the sheet glass 3.

The primer 14 may be of any material which has good affinity with the sheet glass 3 and can improve the adhesiveness between the sheet glass 3 and the spacer 1 and which provides a tensile adhesive strength between the sheet glass 3 and the spacer 1 of 1 kg/cm$^2$ or more, preferably 3 kg/cm$^2$ or more.

The thickness of the primer 14 used is 0.5 mm or less, preferably 0.3 mm or less, more preferably 0.1 mm or less. And, this thickness is determined in consideration of the water vapor permeability of the primer 14 and the durability of the multiple glazing 9. Further, it is also possible to employ a primer 14 pre-mixed with a desiccating agent.

The primer 14 may specifically comprise silane coupling agent or chlorinated polypropylene, halogenated polyolefine such as chlorinated ethylene, ionomer, ethylene-vinyl acetate, acrylic resins, nylon, epoxy, polyamide, hot-melt butyl, sealant butyl based on polyisobutylene, gum arabic, polyester, silicone, urethane, thiokol and so on. Mixtures of these materials too may be employed as well. Further, it is also possible to apply the primer 14 in a plurality of layers superposed on the sheet glass 3.

Next, a manufacturing method relating to this mode of embodiment of the invention will be described.

The thermoplastic resin or thermoplastic elastomer and the conductive material 16 are formed, through an extrusion process or injection molding process, into a formed member 10 having a predetermined shape as shown in Fig. 12 incorporating the conductive material 16 therein.

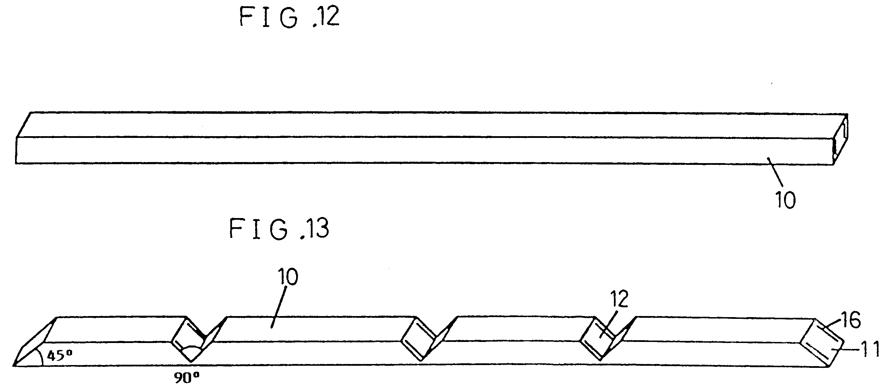

Next, in accordance with the size of the multiple glazing to be manufactured, the formed member 10 is cut off so as to obtain an end face having a slope of 45 degrees or cut away to obtain cut-away portions, as shown in Fig. 13. Then, by heating the cut-off faces 11 or cut-away faces 12 of the cut-off or cut-away formed member 10 to a fluidizable temperature, the cut-off faces 11 or the cut-away faces 12 are placed end-to-end each other to be heat-fused together, whereby the formed member 10 is rendered into a frame-like member as shown in Fig. 5 to be used as the spacer 1. Incidentally, instead of the heat-fusing process, an adhesive agent (not shown) may be employed for bonding the cut-off faces 11 or cut-away faces 12 together.

Next, the primer 14 is applied to the outer peripheral edge of each of the pair of sheet glasses 3, 3 and then the spacer 1 is placed on to this primer 14 on the one sheet glass 3. In this, adjustment is made so as to substantially align the respective peripheral edge of the spacer 1 with the corresponding respective outer peripheral edge of the sheet glass 3 applied with the primer 14. Thereafter, the other sheet glass 3 is placed on to the spacer 1, whereby the spacer 1 is retained under pressure between the two sheet glasses 3, 3.

Next, the sheet glasses 3,3 binding the spacer 1 under pressure therebetween are put into a high-frequency electric field, so that the conductive material 16 within the spacer 1 may be selectively heated so as to melt the spacer 1 with this heat, whereby the sheet glasses 3 and the spacer 1 are bonded with each other via the primer 14.

Next, specific experiments of this mode of embodiment will be described.

(Embodiment 8)

A thermoplastic elastomer (trade name: Santoprene; manufactured by AES Corp.; Shore A hardness 55) and MOLECULAR SIEVE (3A) were mixed and kneaded in advance, with the MOLECULAR SIEVE (3A) as a synthetic crystalline zeolite being 15WT%. And, this mixture material and a stainless film 16 having 0.1 mm thickness were then formed through an extrusion process into a formed member 10. This formed member 10 was cut off into pieces of a required length having an end face having 45 degree slope and cutaway portions were formed at predetermined portions. Thereafter, the cut-off faces 11 and the cut-away faces 12 were heat-fused to each other, whereby a spacer 1 having a frame-like configuration was obtained. Incidentally, the spacer 1 had 5.9 mm thickness.

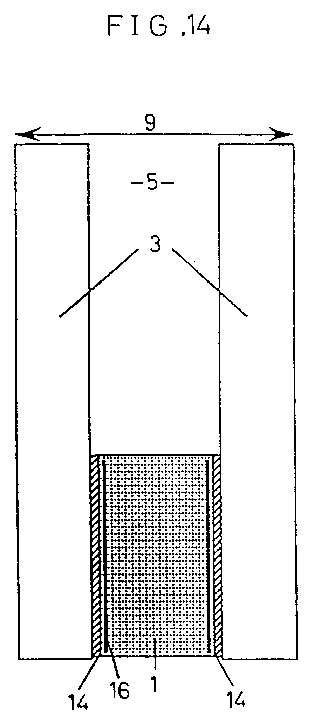

Next, the primer 14 comprised of maleate graft polymer of chlorinated propylene (trade name: CY9020A, manufactured by Toyo Chemical Industrial Corp.) was applied in the thickness of 30 $\mu$m along the 1 cm width of the outer peripheral portion of one sheet glass 3 having 3 mm thickness; and then the spacer 1 was placed on to the primer 14 on the sheet glass 3. Further, in the same manner as above, the other sheet glass 3 was placed on the spacer 1 via the primer 14. Next, the sheet glasses 3, 3 with the spacer 1 were put into a high-frequency electric field of 300 KHz, and a dielectric heating operation of the stainless film 16 incorporated within the spacer 1 was conducted with setting the high-frequency power at 3kW. By this dielectric heating, the spacer 1 adjacent the sheet glasses 3, 3 was molten, so that the spacer 1 and the sheet glasses 3, 3 were respectively bonded via the primer 14, whereby a multiple glazing 9 was obtained (see Fig. 14).

On this multiple glazing 9, a performance test in accordance with JIS R3209 was conducted. Alter 24 hours following the manufacture of the multiple glazing 9, its dew point performance was checked, which provided an initial dew point performance of -50°C. The heat transmission coefficient was 2.80. After 42 days of moisture proof and fading test and 72 cycles of heating-cooling repeat test, the dew-point temperature was -65°C or lower. Hence, the glazing had good durability. Further moisture proof and fading tests were conducted and even after 200 days of testing, there was observed no change in the dew-point performance.

(Embodiment 9)

Except that the used amount of the MOLECULAR SIEVE (3A) employed in Embodiment 8 was changed to 30WT%, the same process as Embodiment 8 was conducted, whereby a multiple glazing 9 was obtained (see Fig. 14).

On this multiple glazing 9, a performance test in accordance with JIS R3209 was conducted. After 24 hours following the manufacture of the multiple glazing 9, its dew point performance was checked, which provided an initial dew point performance of -55°C. The heat transmission coefficient was 2.80. After 42 days of moisture proof and fading test and 72 cycles of heating-cooling repeat test, the dew-point temperature was -65°C or lower. Hence, the glazing had good durability. Further moisture proof and fading tests were conducted and even after 200 days of these testing, there was observed no change in the dew-point performance.

(Embodiment 10)

Except that Trefsin (manufactured by AES Corp.; hardness 65) comprised of a copolymer of isobutylene-isoprene rubber and polypropylene was employed as the thermoplastic elastomer for the spacer 1, the process was conducted in the same manner as Embodiment 8, whereby a multiple glazing 9 (see Fig. 14) was obtained.

On this multiple glazing 9, a performance test in accordance with JIS R3209 was conducted. After 24 hours following the manufacture of the multiple glazing 9, its dew point performance was checked, which provided an initial dew point performance of -35°C. The heat transmission coefficient was 2.80. After 42 days of moisture proof and fading test and 72 cycles of heating-cooling repeat test, the dew-point temperature was -65°C or lower. Hence, the glazing had good durability. Further moisture proof and fading tests were conducted and even after 200 days of these testing, there was observed no change in the dew-point performance.

(Embodiment 11)

As a thermoplastic elastomer which is a copolymer of polypropylene and ethylene-propylene rubber (EPDM), Santoprene (trade name; Shore D hardness 40) and an aluminum tape 16 having 0.2 mm thickness were formed simultaneously through an extrusion process, whereby a formed member 10 having a hollow portion 8 of 4 mm in diameter was obtained. After this formed member 10 was cut into a predetermined length to obtain an end face having 45 degree slope, in the surface of the side of the formed member 10 adjacent the sealed layer 5, a plurality of pores having a diameter of 0.2 mm approximately were defined with an interval of 2 cm, so as to allow communication of air to be sealed within the sealed layer 5 with the hollow portion 8. Then, after filling the adhesive agent (trade name: MOLECULAR SIEVE (3A)) into the hollow portion 8, the cut-off faces 11 and the cut-away faces 12 were heat-fused together, whereby a spacer 1 was obtained. This spacer 1 had 5.9 mm thickness.

Thereafter, on the faces of the spacer 1 to be bonded with the sheet glasses 3, a primer 14 comprised of a mixture (weight ratio 10:1) of Chemlok 481(trade name; manufactured by Lord Far East Corp.) and Chemlok 69S (trade name; manufactured by Lord Far East Corp.) was applied in the thickness of 30 μm. And, the spacer 1 was placed on the sheet glass 3 via the primer 14. In the same manner as above, the other sheet glass 3 was placed on the spacer 1 via the primer 14.

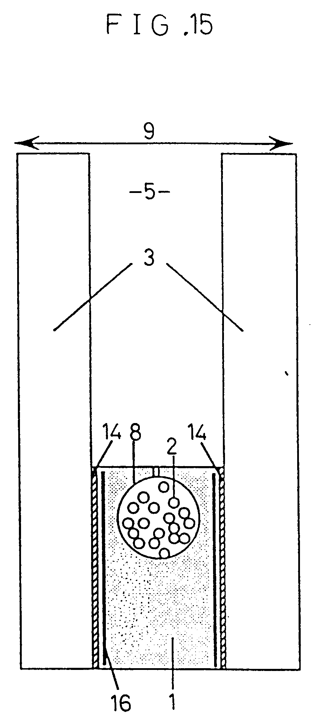

Next, the aluminum tape 16 incorporated within the spacer 1 was subjected to a dielectric heating operation with the entire spacer 1 being located within the high-frequency magnetic field, whereby a multiple glazing 9 having a length of 500 mm and a width of 350 mm was obtained (see Fig. 15). Incidentally, the amount of MOLECULAR SIEVE (3A) used was 30 g.

On this multiple glazing 9, a performance test in accordance with JIS R3209 was conducted. After 24 hours following the manufacture of the multiple glazing 9, its dew point performance was checked, which provided an initial dew point performance of -65°C. The heat transmission coefficient was 2.77. After 42 days of moisture proof and fading test and 72 cycles of heating-cooling repeat test, the dew-point temperature was -65°C or lower. Hence, the glazing had good durability. Further moisture proof and fading tests were conducted and even after 200 days of these testing, there was observed no change in the dew-point performance.

(Embodiment 12)

As a thermoplastic elastomer which is a copolymer of polypropylene and ethylene-propylene rubber (EPDM), Santoprene (trade name; Shore D hardness 40) and an aluminum tape 16 having 0.2 mm thickness were formed by an extrusion process, whereby a formed member 10 having a hollow portion 8 of 6 mm in diameter was obtained. After this formed member 10 was cut into a predetermined length to obtain an end face having 45 degree slope and cut-away portions were defined at predetermined portions thereof, MOLECULAR SIEVE (3A) as the desiccating agent 2 was filled into the hollow portion 8 of this formed member 10. Then, the cut-off faces 11 and the cut-away faces 12 were respectively heat-fused together, whereby a spacer 1 having a frame-like configuration was obtained. This spacer 1 had 11.9 mm thickness.

Next, on the faces of the spacer 1 to be bonded with the sheet glasses 3, a primer 14 comprised of a mixture (weight ratio 1: 1) of chlorinated propylene (trade name: 13-LB manufactured by Toyo Chemical Industrial Corp.) and chlorinated ethylene vinyl acetate (trade name: 10SV manufactured by Toyo Chemical Industrial Corp.) was applied in the thickness of 50 μm. And, the spacer 1 was placed on the sheet glass 3 via the primer 14. In the same manner as above, the other sheet glass 3 was placed on the spacer 4 via the primer 14.

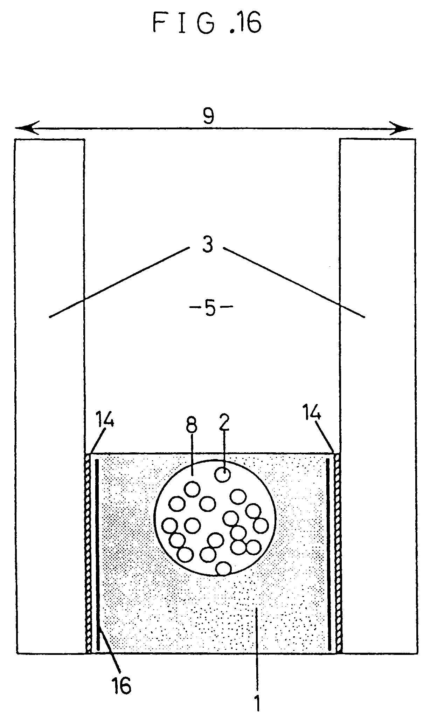

Next, the aluminum tape 16 incorporated within the spacer 1 was subjected to a dielectric heating operation with the entire spacer 1 being located within the high-frequency electric field, whereby a multiple glazing 9 having a length of 500 mm and a width of 350 mm was obtained (see Fig. 16). Incidentally the amount of MOLECULAR SIEVE (3A) used was 45 g.

On this multiple glazing 9, a performance test in accordance with JIS R3209 was conducted. After 24 hours following the manufacture of the multiple glazing 9, its dew point performance was checked, which provided an initial dew point performance of -65°C or lower. The heat transmission coefficient was 2.47. After 42 days of moisture proof and fading test and 72 cycles of heating-cooling repeat test, the dew-point temperature was -65°C or lower. Hence, the glazing had good durability. Further moisture proof and fading tests were conducted and even after 200 days of these testing, there was observed no change in the dew-point performance.

(Embodiment 13)

Alcryn 2070NC (trade name; manufactured by Du Pond Tau Co., Ltd.; Shore A hardness 68) and MOLECULAR SIEVE were mixed and kneaded together in advance, with the MOLECULAR SIEVE (3A) being WT25%. This kneaded mixture and an aluminum tape 16 having a thickness of 0.1 mm and a width of 5.4 mm were extruded simultaneously to form a spacer 1 with a frame member 7. This formed member 10 was cut off into pieces of a required length having an end face having 45 degree slope. Thereafter, the cut-off faces 11 and the cut-away faces 12 were respectively heat-fused to each other, whereby the spacer 1 was obtained. Incidentally, the spacer 1 had 5.8 mm thickness.

On the faces of the spacer 1 to be bonded with the sheet glasses 3, a primer 14 (trade name: A1669B; manufactured by GF Goodrich Co., Ltd.) was applied in the thickness of 15 $\mu$m. And, this spacer 1 was placed on the sheet glass 3 via the primer 14. In the same manner as above, the other sheet glass 3 was placed on the spacer 4 via the primer 14.

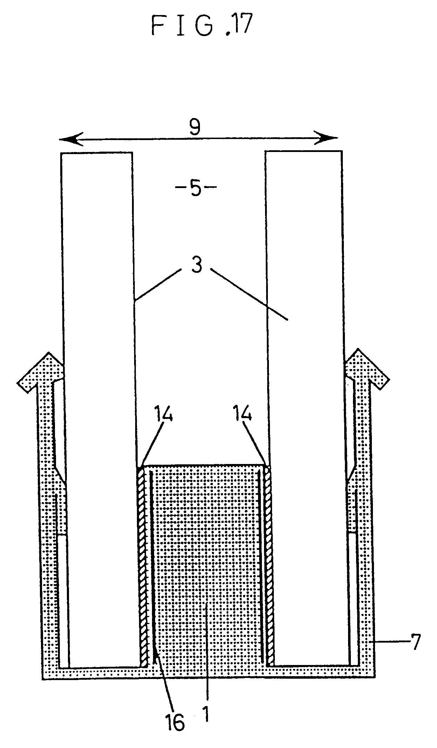

Next, the aluminum tape 16 incorporated within the spacer 1 was subjected to a dielectric heating operation with the entire spacer 1 being located within the high-frequency electric field, whereby a multiple glazing 9 having a length of 500 mm and a width of 350 mm was obtained (see Fig. 17).

On this multiple glazing 9, a performance test in accordance with JIS R3209 was conducted. After 24 hours following the manufacture of the multiple glazing 9, its dew point performance was checked, which provided an initial dew point performance of -45°C. The heat transmission coefficient was 2.85. After 42 days of moisture proof and fading test and 72 cycles of heating-cooling repeat test, the dew-point temperature was -65°C or lower. Hence, the glazing had good durability. Further moisture proof and fading tests were conducted and even after 200 days of these testing, there was observed no change in the dew-point performance.

[III] others

(1) In addition to the mode of embodiment [II] described above, the non-vapor-transmitting substance shown in Fig. 1 may be disposed at a portion inside the spacer 1 adjacent the frame member.

(2) Between the spacer and the frame member and also between the glass and the frame member, a conductive material such as an aluminum tape, may be disposed, so that through the high-frequency heating operation both the adhesive agent or the primer potion and the conductive portion may be together bonded to the sheet glasses and the spacer. With this, the non-vapor transmitting performance may be further enhanced, so that a multiple glazing having even better durability may be obtained advantageously.

(3) Further, by increasing the inner pressure of the sealed layer by filling dry gas therein, it will become possible to minimize the intrusion of moist air from the outside.

In addition to the use in the general construction materials, the multiple glazings relating to the present invention may be used also for a variety of other purposes which requiring higher durability.

## Claims

1. A multiple glazing comprising a pair of sheet glasses spaced apart from each other in the direction of thickness thereof via a spacer disposed at peripheries thereof the pair of sheet glasses and the spacer being bonded to each other by bonding means; wherein the pair of sheet glasses and the spacer are bonded by high-frequency heating means.

2. A multiple glazing according to claim 1, wherein the bonding by the high-frequency bonding means is such that the pair of sheet glasses and the spacer are bonded by high-frequency or microwave dielectric heating utilizing a difference between a dielectric loss of adhesive agent and a dielectric loss of the sheet glasses and/or spacer.

3. A multiple glazing according to claim 1 or 2, wherein the spacer is formed of a material consisting of at least one kind of thermoplastic resin, thermoplastic elastomer or rubber having a water vapor permeability (0.1 mm thickness) of $100g/m^2 \cdot 24$ hours or less determined based on JIS Z208.

4. A multiple glazing according to any one of claims 1-3, wherein the spacer is integrated with a frame member to be assembled into a sash and this frame member is formed of a material comprised of at least one kind of thermoplastic resin, thermoplastic elastomer or rubber same as or different from that of the spacer.

5. A multiple glazing according to any one of claims 1-4, wherein the spacer incorporates therein non-vapor-transmitting substance.

6. A multiple glazing according to any one of claims 1-5, wherein the spacer is pre-mixed with a desiccating agent.

7. A multiple glazing according to any one of claims 1-5, wherein the spacer includes a hollow portion within which a desiccating agent is sealed.

8. A multiple glazing according to claim 1 or 2, wherein the adhesive agent has a product value of 0.08 or greater obtained by multiplying a dielectric constant by a dielectric loss tangent thereof at a frequency of 1 MHz.

9. A multiple glazing according to any one of claims 3-7, wherein the thermoplastic elastomer comprises a copolymer of a polyolefine including polypropylene or polyethylene and a synthetic rubber including EPDM rubber or isobutylene-isoprene rubber.

10. A multiple glazing according to claim 1, wherein a conductive material is incorporated within the spacer and the bonding by the high-frequency heating means is bonding between the spacer and the pair of sheet glasses by means of high-frequency dielectric heating on the conductive material.

11. A multiple glazing according to claim 10, wherein the spacer is formed of a material consisting of thermoplastic resin or thermoplastic elastomer having a water vapor permeability (0.1 mm thickness) of $100g/m^2 \cdot 24$ hours or less determined based on JIS Z208.

12. A multiple glazing according to claim 10, wherein the conductive material comprises iron, aluminum, copper or alloys thereof or carbon black.

13. A multiple glazing according to claim 10, wherein a primer is applied to portions of the sheet glasses to be brought into opposition to the spacer or to portions of the spacer to be brought into opposition to the sheet glasses.

14. A multiple glazing according to claim 10 or 11, wherein the spacer is integrated with a frame member to be assembled into a sash and this frame member is formed of a material comprised of at least one kind of thermoplastic resin or thermoplastic elastomer same as or different from that of the spacer.

15. A multiple glazing according to claim 10, 11 or 14, wherein the spacer is pre-mixed with a desiccating agent.

16. A multiple glazing according to claim 10, 11 or 14, wherein the spacer includes a hollow portion within which a desiccating agent is sealed.

17. A multiple glazing according to claim 11, 14, 15 or 16, wherein the thermoplastic elastomer comprises a copolymer of a polyolefine including polypropylene or polyethylene and a synthetic rubber including EPDM rubber or isobutylene-isoprene rubber.

18. A method of manufacturing a multiple glazing comprising:

a first step of forming a material consisting of at least one kind of thermoplastic resin, thermoplastic elastomer or rubber into a predetermined shape, the material consisting of at least one kind of thermoplastic resin, thermoplastic elastomer or rubber having a water vapor permeability (0.1 mm thickness) of $100g/m^2 \cdot 24$ hours or less determined based on JIS Z208;
a second step of cutting off or away the formed member formed by the first step into pieces having a predetermined shape and then heat-sealing or bonding together cut-off or cut-away faces of these pieces into a formed member corresponding to the external dimensions of the sheet glasses;
a third step of disposing the formed member formed by the second step, as a spacer, on one sheet glass via an adhesive agent and then causing this spacer to be bound between the one sheet glass and the other sheet glass via the adhesive agent; and
a fourth step of selectively heating the adhesive agent by keeping the bound member between the sheet glasses within an electric field of high-frequency or microwave, thus bonding the spacer to the respective sheet glasses.

19. A method of manufacturing a multiple glazing according to claim 18, wherein in the first step, the adhesive agent is extruded simultaneously with the material for forming the spacer to be integrated with portions of the spacer to be brought into opposition to the sheet glasses.

20. A method of manufacturing a multiple glazing according to claim 18, wherein the adhesive agent is applied to portions of the sheet glasses to be brought into opposition to the spacer or to portions of the spacer to be brought into opposition to the spacer.

21. A method of manufacturing a multiple glazing according to claim 18, wherein the adhesive agent is in the form of a sheet to be interposed between the sheet glasses and the spacer.

22. A method of manufacturing a multiple glazing according to claim 18, wherein the bonding between the pair of sheet glasses and the spacer is due to dielectric heating utilizing a difference between a dielectric loss of adhesive agent and a dielectric loss of the sheet glasses and/or spacer.

23. A method of manufacturing a multiple glazing according to claim 18, wherein the spacer is integrated with a frame member to be assembled into a sash and this frame member is formed of a material comprised of at least one kind of thermoplastic resin, thermoplastic elastomer or rubber same as or different from that of the spacer.

24. A method of manufacturing a multiple glazing according to claim 18 or 23, wherein the spacer incorporates therein non-vapor-transmitting substance.

25. A method of manufacturing a multiple glazing according to claim 18, 23 or 24, wherein the spacer is pre-mixed with a desiccating agent.

26. A method of manufacturing a multiple glazing according to claim 18, 23 or 24, wherein the spacer includes a hollow portion within which a desiccating agent is sealed.

27. A multiple glazing according to claim 18, 23, 24, 25 or 26, wherein the thermoplastic elastomer comprises a copolymer of a polyolefine including polypropylene or polyethylene and a synthetic rubber including EPDM rubber or isobutylene-isoprene rubber.

28. A method of manufacturing a multiple glazing comprising: a first step of forming a material made of thermoplastic resin or thermoplastic elastomer and a sheet-like or powder-like conductive material together into a formed member having a predetermined shape, the thermoplastic resin or elastomer material having a water vapor permeability (0.1 mm thickness) of $100g/m^2 \cdot 24$ hours or less determined based on JIS Z208;

a second step of cutting off or away the formed member formed by the first step into pieces having a predetermined shape and then heat-sealing or bonding together cut-off or cut-away faces of these pieces into a shape corresponding to the external dimensions of the sheet glasses;

a third step of disposing the formed member formed by the second step, as a spacer, on one sheet glass and then causing this spacer to be bound between the one sheet glass and the other sheet glass; and

a fourth step of selectively heating the conductive material by keeping the bound member between the sheet glasses within an electromagnetic field of high-frequency wave, thereby to melt the spacer to be bonded with the sheet glasses.

29. A method of manufacturing a multiple glazing according to claim 28, wherein a primer is applied in advance to portions of the sheet glasses to be brought into opposition to the spacer.

30. A method of manufacturing a multiple glazing according to claim 28 or 29, wherein the conductive material comprises iron, aluminum, copper or alloys thereof or carbon black.

31. A method of manufacturing a multiple glazing according to claim 28, wherein the spacer is integrated with a frame member to be assembled into a sash and this frame member is formed of a material comprised of at least one kind of thermoplastic resin or thermoplastic elastomer same as or different from that of the spacer.

32. A method of manufacturing a multiple glazing according to claim 28 or 31, wherein the spacer is pre-mixed with a desiccating agent.

33. A method of manufacturing a multiple glazing according to claim 28 or 31, wherein the spacer includes a hollow portion within which a desiccating agent is sealed.

34. A method of manufacturing a multiple glazing according to claim 28, 31, 32 or 33, wherein the thermoplastic elastomer comprises a copolymer of a polyolefine including polypropylene or polyethylene and a synthetic rubber including EPDM rubber or isobutylene-isoprene rubber.

# FIG .1

FIG.2

FIG.3

FIG.4

FIG.5

# FIG.6

FIG.7

# FIG.8

# FIG.9

# F I G .10

FIG .11

FIG.12

FIG.13

FIG .14

FIG .15

FIG .16

# F I G .17

## INTERNATIONAL SEARCH REPORT

| International application No. |
| --- |
| PCT/JP97/00187 |

**A. CLASSIFICATION OF SUBJECT MATTER**

Int. Cl$^6$ C03C27/06, 27/10

According to International Patent Classification (IPC) or to both national classification and IPC

**B. FIELDS SEARCHED**

Minimum documentation searched (classification system followed by classification symbols)

Int. Cl$^6$ C03C27/06, 27/10

Documentation searched other than minimum documentation to the extent that such documents are included in the fields searched

| | |
| --- | --- |
| Jitsuyo Shinan Koho | 1926 – 1997 |
| Kokai Jitsuyo Shinan Koho | 1971 – 1997 |
| Toroku Jitsuyo Shinan Koho | 1994 – 1997 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP, 30-005981, B1 (Asahi Glass Co., Ltd.), August 26, 1955 (26. 08. 55), Claim (Family: none) | 1, 10 |
| Y | | 2 |
| X | JP, 61-127647, A (Matsushita Electric Works, Ltd.), June 14, 1986 (14. 06. 86), Claim 2; page 214, lower right column, purpose; Fig. 1 (Family: none) | 1, 10 |
| Y | | 2 |
| X | JP, 04-048741, B2 (Glaverbel), August 7, 1992 (07. 08. 92), Claim 1; page 127, column 5, lines 2 to 12; column 19 & DE, 3319155, A & GB, 2122058, A | 1, 10 |
| Y | & US, 4506126, A | 2, 3, 5-7, 9, 11-13, 15-22, 24-30, 32-34 |

| [X] Further documents are listed in the continuation of Box C. | [ ] See patent family annex. |
| --- | --- |

* Special categories of cited documents:

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
| --- | --- |
| April 21, 1997 (21. 04. 97) | April 30, 1997 (30. 04. 97) |

| Name and mailing address of the ISA/ | Authorized officer |
| --- | --- |
| Japanese Patent Office | |
| Facsimile No. | Telephone No. |

Form PCT/ISA/210 (second sheet) (July 1992)

**INTERNATIONAL SEARCH REPORT**

International application No.

PCT/JP97/00187

C (Continuation). DOCUMENTS CONSIDERED TO BE RELEVANT

| Category* | Citation of document, with indication, where appropriate, of the relevant passages | Relevant to claim No. |
|---|---|---|
| Y | JP, 62-059067, B2 (Matsushita Electric Works, Ltd.), December 9, 1987 (09. 12. 87)(Family: none) | 2 |
| Y | JP, 07-017748, A (Tokai Kogyo Co., Ltd.), January 20, 1995 (20. 01. 95), Claim 1; paragraph 0049; Fig. 1 (Family: none) | 5, 6, 15, 17, 24, 25, 27 |
| Y | JP, 06-229172, A (Tostem Corp.), August 16, 1994 (16. 08. 94)(Family: none) | 5, 7, 16, 17, 24, 26, 27 |

Form PCT/ISA/210 (continuation of second sheet) (July 1992)